# EUROPEAN PATENT APPLICATION

(11) **EP 4 757 035 A1**
(43) Date of publication of application: **10.06.2026**
(21) Application number: 24910332.6
(22) Date of filing: 08.11.2024
(51) Int. Cl.: H01M 50/251, H02J 15/00, H02B 1/30, H02B 1/28, A62C 3/16

(54) **ENERGY STORAGE INTEGRATED APPARATUS**

(30) Priority: 26.12.2023 CN 202323591657 U; 26.12.2023 CN 202323569837 U
(71) Applicant: Eve Energy Storage Co., Ltd, Wuhan, Hubei 430074 (CN)
(72) Inventor: XIA, Houpo, Wuhan, Hubei 430074 (CN); SUN, Yuanbiao, Wuhan, Hubei 430074 (CN); CHEN, Zhuo, Wuhan, Hubei 430074 (CN); ZOU, Yulang, Wuhan, Hubei 430074 (CN); ZHAO, Zihui, Wuhan, Hubei 430074 (CN); YI, Haohao, Wuhan, Hubei 430074 (CN)
(74) Representative: Studio Torta S.p.A.
(86) International application number: PCT/CN2024/130685
(87) International publication number: WO 2025/139395

(57) **Abstract**

An energy storage integration device is provided, including an integrated cabin and an energy storage integrated cabinet. The integrated cabin includes an electrical compartment. The energy storage integrated cabinet is located within the electrical compartment and includes a cabinet body. The cabinet body includes a first chamber, a second chamber, and a third chamber spaced apart in a first direction. The energy storage integrated cabinet is equipped with an AC and control assembly, a DC distribution assembly, and a cable assembly. The AC and control assembly is located in the first chamber.

## Description

This application claims the priority of Chinese Patent Applications No. 202323591657.3 and 202323569837.1, filed on December 26, 2023, the entire contents of these applications are incorporated herein by reference.

### Technical Field

The present application relates to the field of battery technology, and in particular, to an energy storage integration device.

### Related Art

As the electrochemical energy storage industry continues to evolve, the demand for greater area energy density in energy storage power stations keeps rising. To meet this challenge, prefabricated container-type battery energy storage systems have emerged on the market. Currently, these systems typically manage power distribution through a dedicated distribution box mounted on the wall of the electrical compartment. Further, the direct current (DC) system is accommodated by a separate combiner box placed on the floor within the same compartment.

### SUMMARY

However, this arrangement results in the distribution box and the combiner box occupying most of the space in the electrical compartment, leading to low space utilization, complicated wiring, and difficult maintenance.

Firstly, the present application provides an energy storage integration device, including:
an integrated cabin comprising an electrical compartment; and
an energy storage integrated cabinet located in the electrical compartment, wherein the energy storage integrated cabinet includes a cabinet body, the cabinet body includes a first chamber, a second chamber, and a third chamber spaced apart along a first direction;
wherein the energy storage integrated cabinet further includes an AC and control assembly, a DC distribution assembly, and a cable assembly; the AC and control assembly is disposed in the first chamber; the DC distribution assembly is disposed in the second chamber; the cable assembly is disposed in the third chamber.

The energy storage integration device provided in this application includes at least the following beneficial effects. The energy storage integrated cabinet includes an AC and control assembly, a DC distribution assembly, and a cable assembly. The AC and control assembly is located in the first chamber; the DC distribution assembly is located in the second chamber; and the cable assembly is located in the third chamber. The integration of the AC and control assembly, the DC distribution assembly, and the cable assembly within the energy storage integrated cabinet improves the space utilization of the electrical compartment and facilitates inspection and maintenance by maintenance personnel

### BRIEF DESCRIPTION OF THE DRAWINGS

FIG. 1 is a schematic structural view illustrating an energy storage integration device provided by one embodiment of the present application.
FIGS. 2A and 2B are schematic structural diagrams of an energy storage integrated cabinet provided by one embodiment of the present application.
FIG. 3 is a partial schematic view of a third chamber provided by one embodiment of the present application.
FIG. 4 is a schematic electrical diagram of an AC and control assembly provided by one embodiment of the present application.
FIG. 5 is a schematic electrical diagram of a DC distribution assembly provided by one embodiment of the present application.
FIG. 6 is a schematic structural view of the energy storage integration device provided by one embodiment of the present application.
FIG. 7 is a schematic structural view of the energy storage integrated cabinet provided by one embodiment of the present application.
FIG. 8 is another schematic structural view of the energy storage integrated cabinet provided by one embodiment of the present application.
FIG. 9, FIG. 10, and FIG. 11 are flowcharts of a safety system for the energy storage integration device provided by one embodiment of the present application.

### Descriptions of labels in the drawings:

100: energy storage integration device; 1001: electrical compartment; 1002: battery compartment; 200: energy storage integrated cabinet; 10: cabinet body; 11: chamber; 111: first chamber; 112: second chamber; 113: third chamber; 12: first partition; 13: second partition; 14: cabinet door; 15: exhaust vent; 16: status indicator light; 17: operation button; 18: display screen; 19: emergency stop button; 20: AC and control assembly; 201: AC input circuit breaker; 202: branch circuit breaker; 203: battery management system main control board; 204: uninterruptible power supply (UPS); 205: backup power supply; 206: first surge protector; 207: current transformer; 30: DC distribution assembly; 301: DC isolation switch; 40: cable assembly; 401: second surge protector; 402: fuse; 403: connecting busbar; 403a: positive busbar; 403b: negative busbar; 404: first sub-connecting busbar; 405: second sub-connecting busbar; 406: cable group; 407: cable; 408: isolation plate; 409: insulating column; 10A: integrated cabin; 12A: first integrated plate; 13A: second integrated plate; 14A: support beams; 30A: first fire protection component; 301A: smoke sensor; 302: temperature sensor; 40A: second fire protection component; 401A: first sub-fire protection component; 402A: second sub-fire protection component; 501: battery rack.

### DETAILED DESCRIPTION

In the description of the present application, unless specifically defined otherwise, terms such as "connected," "coupled," and "fixed" are to be interpreted broadly. For instance: They can refer to a fixed connection, a detachable connection, or the components being integrated as a single unit. The connection may be mechanical or electrical in nature. It can be a direct connection or an indirect connection through an intermediate medium. It can describe the internal connection of two components or the interaction between them. Those skilled in the art can understand the specific meaning of these terms in this application based on the specific context.

In this application, unless explicitly stated or defined otherwise, the phrase "first feature on or under the second feature" can include: Direct contact between the first and second features. No direct contact between the first and second features, but contact through another feature between them. Furthermore: "On," "above," and "over" include the first feature being directly above, diagonally above, or at a higher vertical level than the second feature. "Under," "below," and "beneath" include the first feature being directly below, diagonally below, or at a lower vertical level than the second feature.

In the description of this embodiment, the terms "upper," "lower," "left," "right," "front," and "rear" and other positional relationships are based on the orientations shown in the drawings. This is for ease of description and simplified operation, and does not indicate or imply that the devices or components referred to must have a specific orientation or be constructed and operated in a specific orientation. Therefore, it should not be understood as a limitation on this application. In addition, the terms "first" and "second" are used for descriptive differentiation and have no special meaning.

In a first aspect, this application provides an energy storage integration device 100.

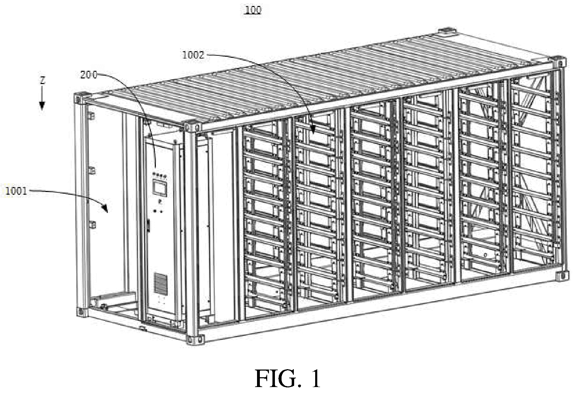

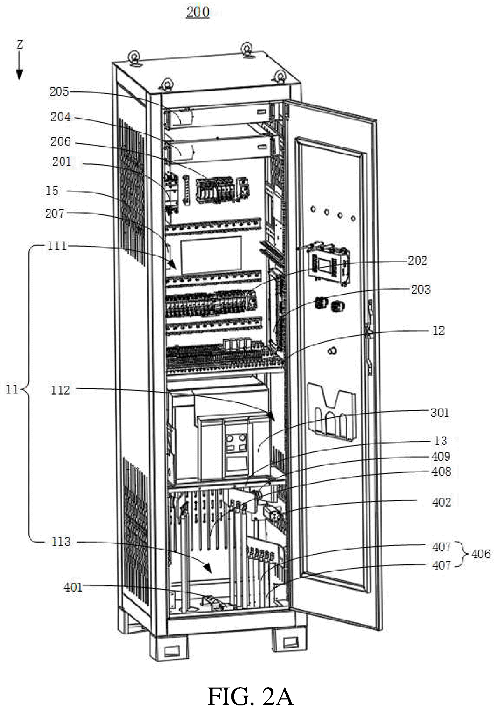

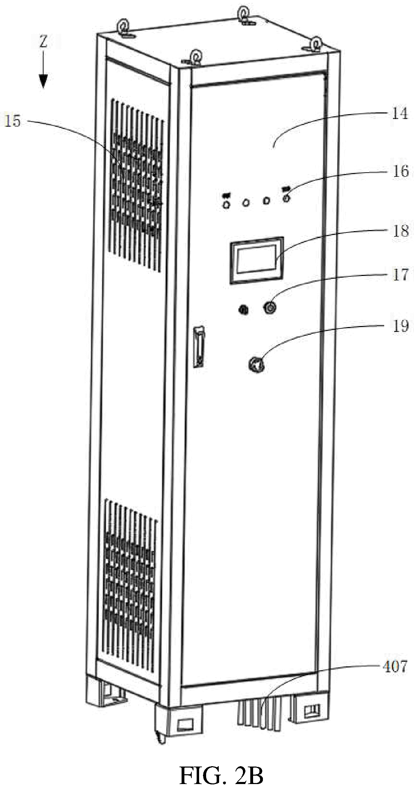

Referring to FIG. 1, FIG. 2A, and FIG. 2B, the energy storage integration device 100 includes an electrical compartment 1001 and an energy storage integrated cabinet 200, the energy storage integrated cabinet 200 is located within the electrical compartment 1001.

The energy storage integrated cabinet 200 includes a cabinet body 10, the cabinet body 10 includes a first chamber 111, a second chamber 112, and a third chamber 113 spaced apart along a first direction Z.

The energy storage integrated cabinet 200 also includes an alternating current (AC) and control assembly 20, a direct current (DC) distribution assembly 30, and a cable assembly 40; the AC and control assembly 20 is located in the first chamber 111; the DC distribution assembly 30 is located in the second chamber 112; and the cable assembly 40 is located in the third chamber 113.

The cabinet body 10 includes a plurality of chambers 11 arranged along the first direction Z. The number of chambers 11 is, for example, three, and the three chambers 11 are the first chamber 111, the second chamber 112, and the third chamber 113, respectively. The AC and control assembly 20, the DC distribution assembly 30, and the cable assembly 40 are all arranged in the cabinet body 10. Compared with the related technology in which a combiner box and a distribution box are separately arranged in an electrical compartment, the energy storage integrated cabinet 200 of one embodiment of the present application integrates the AC and control assembly 20, the DC distribution assembly 30, and the cable assembly 40 into one cabinet body 10, which improves the space utilization of the electrical compartment 1001. At the same time, when the energy storage integrated cabinet 200 fails, it is also convenient for maintenance personnel to inspect and maintain the AC and control assembly 20, the DC distribution assembly 30, and the cable assembly 40 at the same time. Therefore, the design of the energy storage integrated cabinet 200 not only improves the space utilization of the electrical compartment 1001, but also improves the maintenance efficiency and saves labor costs, manufacturing costs and maintenance costs.

In one embodiment of the present application, the cabinet body 10 includes a first partition 12 and a second partition 13 spaced apart in the first direction Z. The first partition 12 and the second partition 13 divide the cabinet body 10 into the first chamber 111, the second chamber 112, and the third chamber 113.

The first partition 12 and the second partition 13 can be parallel to each other or inclined to each other, depending on the actual application. In one embodiment of this application, the first partition 12 and the second partition 13 are parallel to an upper surface of the cabinet body 10 and perpendicular to a sidewall of the cabinet body 10, thereby dividing the cabinet body 10 into the first chamber 111, the second chamber 112, and the third chamber 113, so that the AC and control assembly 20, the DC distribution assembly 30, and the cable assembly 40 can be sequentially arranged in the first chamber 111, the second chamber 112, and the third chamber 113.

In one embodiment of this application, the second partition 13 is provided with a connecting groove (not shown in the drawings) in the first direction Z. The connecting groove connects the second chamber 112 and the third chamber 113.

The connecting groove penetrates the second partition 13 in the first direction Z, connecting the second chamber 112 and the third chamber 113. The connecting groove is configured to allow a connecting busbar 403 or a signal line (described in detail later) in the cable assembly 40 to pass through. The connecting busbar 403 or the signal line connects a DC isolation switch 301 or a battery management system main control board 203 through the connecting groove, thereby unifying the wiring path and facilitating the arrangement of the wiring.

One end of each of multiple connecting busbars 403 can be electrically connected to the DC distribution assembly 30 through the connecting groove.

The energy storage integration device 100 also includes a battery compartment 1002, which is adjacently arranged to the electrical compartment 1001. A plurality of battery clusters are arranged in the battery compartment 1002. The battery clusters are connected to the DC isolation switch 301 to supply power to the DC distribution assembly 30.

Referring to FIG. 2B, the cabinet body 10 is also equipped with a cabinet door 14. The cabinet door 14 is designed to open or close the cabinet body 10 to facilitate maintenance by maintenance personnel.

A status indicator light 16 is arranged on the cabinet body 10, and the status indicator light 16 is configured to prompt the internal condition of the energy storage integrated cabinet 200. The status indicator light 16 includes a red light and a green light. When the status indicator light 16 displays green, the internal circuit or safety condition of the energy storage integrated cabinet 200 is good; when the status indicator light 16 displays red, it means that there is a potential hazard in the internal circuit or safety of the energy storage integrated cabinet 200, which needs to be repaired. The staff can know whether there is a safety hazard or circuit hazard in the energy storage integrated cabinet 200 according to the status indicator light 16.

An operation button 17 is also arranged on the cabinet body 10. The operation button 17 includes a connect button and a disconnect button. Both the connect button and the disconnect button are connected to the DC isolation switch 301. The connect button is configured to activate the DC isolation switch 301, and the disconnect button is configured to deactivate the DC isolation switch 301, thereby disconnecting the connection between the DC isolation switch 301 and the battery cluster.

A display screen 18 is also arranged on the cabinet body 10, and the display screen 18 is configured to display the internal status of the energy storage integrated cabinet 200.

An emergency stop button 19 is also mounted on cabinet body 10. This button can be activated to halt the operation of the energy storage integrated cabinet 200 in the event of a fire or when an emergency stop is necessary. It should be noted that cabinet body 10 may include more than just the components listed above; its configuration is determined by its specific application.

A plurality of exhaust vents 15 are positioned on the cabinet body 10. The exhaust vents 15 are arranged in an array on the cabinet body 10. The exhaust vents 15 penetrate the sidewall of the cabinet body 10 and connect the external air to both the first chamber 111 and the third chamber 113 of the energy storage integrated cabinet 200. The exhaust vents 15 are configured to facilitate heat dissipation and provide ventilation for the energy storage integrated cabinet 200.

In one embodiment of this application, the cable assembly 40 includes multiple connecting busbars 403. The DC distribution assembly 30 includes a DC isolation switch 301, and the connecting busbars 403 are connected to the DC isolation switch 301.

The DC isolation switch 301 is located in the second chamber 112 and is connected to the connecting busbars 403. One end of the connecting busbar 403 away from the DC isolation switch 301 is connected to a power source, such as a battery cluster in a battery compartment. One end of the connecting busbar 403 away from the DC isolation switch 301 can also be connected to an external power conversion system (PCS). That is, the connecting busbar 403 can include a first sub-connecting busbar 404 and a second sub-connecting busbar 405. The two ends of the first sub-connecting busbar 404 are respectively connected to the DC isolation switch 301 and the battery cluster, and the two ends of the second sub-connecting busbar 405 are connected to the PCS.

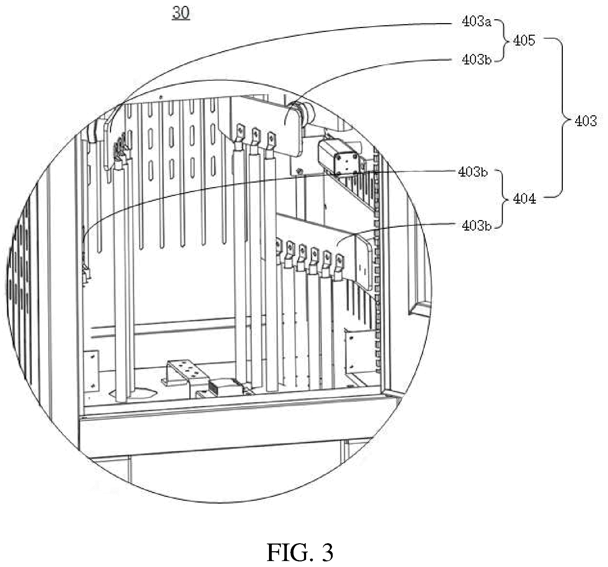

Referring to FIG. 2A and FIG. 3, in one embodiment of the present application, the cable assembly 40 includes a plurality of cable groups 406. One end of each cable group 406 is connected to the connecting busbar 403, and the other end of each cable group 406 is connected to the battery cluster and/or the PCS.

Each cable group 406 includes a plurality of cables 407. Each cable 407 is wrapped in an insulating protective layer. The insulating protective layers keep the cables 407 separated from each other. The cables 407 are arranged on opposite sides of the third chamber 113 to segregate high-power and low-power circuits, thereby minimizing electromagnetic interference.

Each busbar can be provided with one cable group 406. The first sub-connecting busbar 404 is directly connected to the DC isolation switch 301, one end of the cable group 406 is connected to the first sub-connecting busbar 404, and the other end passes through the bottom of the cabinet body 10 and is connected to the battery cluster; the second sub-connecting busbar 405 is directly connected to the DC isolation switch 301, one end of the cable group 406 is connected to the second sub-connecting busbar 405, and the other end passes through the bottom of the cabinet body 10 and is connected to the PCS (not illustrated in the drawing). However, the number of cable groups 406 on the connecting busbar 403 is not limited to one group, and can be adaptively increased according to the actual situation, subject to the actual application.

The third chamber 113 is further provided with a second surge protector 401, a fuse 402, and a grounding bar. The first chamber 111 includes a battery management system main control board 203. The cable assembly 40 also includes signal lines. The second surge protector 401 is connected to the battery management system main control board 203 through the signal lines to provide lightning protection for the DC distribution assembly 30. The fuse 402 serves as a backup protection for the second surge protector 401, providing fuse protection in case of a failure in the second surge protector 401 or an internal short circuit. The grounding bar provides grounding protection for the energy storage integrated cabinet 200.

In one embodiment of this application, the connecting busbar 403 includes a positive busbar 403a and a negative busbar 403b. The positive busbar 403a and the negative busbar 403b are located on opposite sides of the third chamber 113. The third chamber 113 is further provided with an isolation plate 408. The isolation plate 408 is arranged between the positive busbar 403a and the negative busbar 403b, and is configured to isolate the positive busbar 403a and the negative busbar 403b.

Both the first sub-connecting busbar 404 and the second sub-connecting busbar 405 include a positive busbar 403a and a negative busbar 403b. The positive busbars 403a of the first sub-connecting busbar 404 and the second sub-connecting busbar 405 are located on one side of the third chamber 113, and the negative busbars 403b of the first sub-connecting busbar 404 and the second sub-connecting busbar 405 are located on the other side of the third chamber 113. That is, the positive busbar 403a and the negative busbar 403b of both the first sub-connecting busbar 404 and the second sub-connecting busbar 405 are arranged opposite to each other. The positive busbar 403a and the negative busbar 403b of the first sub-connecting busbar 404 are respectively connected to the DC isolation switch 301 and the battery cluster, and the positive busbar 403a and the negative busbar 403b of the second sub-connecting busbar 405 are respectively connected to the DC isolation switch 301 and the PCS.

The positive busbar 403a of the first sub-connecting busbar 404 is a B+ connecting busbar of the battery cluster, and the negative busbar 403b of the first sub-connecting busbar 404 is a B- connecting busbar of the battery cluster. The positive busbar 403a of the second sub-connecting busbar 405 is a P+ connecting busbar of the PCS, and the negative busbar 403b of the second sub-connecting busbar 405 is a P- connecting busbar of the PCS.

There is a gap between the positive busbar 403a and the negative busbar 403b, and the isolation plate 408 is located at the gap, that is, the isolation plate 408 is located between the positive busbar 403a and the negative busbar 403b to prevent a short circuit between the positive busbar 403a and the negative busbar 403b in the cabinet. The number of isolation plates 408 is not limited in this application, as long as the number used can prevent short circuits between the positive busbar 403a and the negative busbar 403b in the cabinet.

The cable assembly 40 also includes insulating columns 409. On the side away from the cabinet door 14, the positive busbar 403a and the negative busbar 403b are connected to the insulating columns 409. The insulating columns 409 are configured to fix the positive busbar 403a and the negative busbar 403b in the third chamber 113. The insulating columns 409 provide insulation, preventing short circuits between the cabinet body 10, the positive busbar 403a, and the negative busbar 403b.

Referring to FIG. 2A, in one embodiment of this application, the AC and control assembly 20 includes an AC input circuit breaker 201 and a plurality of branch circuit breakers 202. The AC input circuit breaker 201 is connected to each of the branch circuit breakers 202.

The AC current supplies power to the AC and control assembly 20. The AC power source can be, for example, mains electricity. The mains electricity supplies power to the AC input circuit breaker 201 and is connected to the AC input circuit breaker 201 through cables. The AC input circuit breaker 201 controls the connection and disconnection of the mains electricity. The mains electricity flows into the AC input circuit breaker 201 and then flows into load devices through the branch circuit breakers 202 to supply power to the load devices.

The number of branch circuit breakers 202 can be nine. Multiple load devices are located in the energy storage integration device 100, and the load devices are respectively connected to the branch circuit breakers 202. The load devices include a liquid cooling unit, a dehumidifier, a fire fighting fan, a fire fighting host, a lighting lamp, and a maintenance socket. One of the branch circuit breakers 202 is also connected to an uninterruptible power supply (UPS) 204, which is connected to other loads. The mains electricity is stabilized by the UPS 204 and then supplied to other connected loads. The branch circuit breaker 202 is also provided with a standby branch. The standby branch is configured to be used as a backup when other branch circuit breakers 202 fail.

The AC and control assembly 20 is provided with a first surge protector 206 to provide lightning protection. The first surge protector 206 is connected to one of the branch circuit breakers 202 and to the battery management system main control board 203 through a signal line.

For example, the energy storage integrated cabinet 200 has a height of 2300 mm, with the AC input circuit breaker 201 installed at a height of 1400 mm. These dimensions are not fixed and can vary. The chosen height allows maintenance personnel to perform inspections and repairs comfortably without the need for a ladder.

In one embodiment of the present application, the AC and control assembly 20 includes a battery management system main control board 203, and the battery management system main control board 203 is connected to the AC input circuit breaker 201 and the branch circuit breakers 202.

A battery management system includes the battery management system main control board 203 and a battery management system slave control board. The battery management system main control board 203 is located in the first chamber 111, and the battery management system slave control board is located in the energy storage integration device 100. The battery management system main control board 203 is connected to the battery management system slave control board. The battery management system main control board 203 is configured to collect signals from the battery management system slave control board, collect signals such as current, voltage, and temperature of the battery cluster in the energy storage integration device 100, collect signals from the load devices (for example, the liquid cooling unit, fire fighting fan, and fire fighting host), monitor the operating status of each device, collect signals from the first surge protector 206 and the second surge protector 401, and initiates protective measures in response to any abnormalities or faults.

In one embodiment of this application, the AC and control assembly 20 further includes the uninterruptible power supply (UPS) 204 and a backup power supply 205 connected to the UPS 204, wherein the UPS 204 is connected to the branch circuit breakers 202 and the DC isolation switch 301.

One of the branch circuit breakers 202 is connected to the UPS 204. The UPS is also connected to additional loads on its branch circuit. The mains electricity is routed through the branch circuit breaker 202 to the UPS 204 for voltage stabilization before supplying distributing power to these additional loads. The additional loads include, for example, a high-voltage box, blinds, sensors, and a debugging socket. The UPS 204 is also connected to the DC isolation switch 301 to provide energy for activating or deactivating the DC isolation switch 301. The UPS 204 also reserves a standby branch.

The UPS 204 is, for example, an online UPS. The UPS is connected to the backup power supply 205. The backup power supply 205 supplies power to the UPS 204 when the mains electricity fails. This ensures that the battery management system main control board 203, the battery management system slave control board, and the DC distribution assembly 30 are not powered off, enabling ongoing system monitoring and protection to maintain the stability and safety of the system.

In the first chamber 111, a debugging socket and a current transformer 207 are installed. The debugging socket is connected to the UPS 204 to provide a power interface for devices such as computers during on-site debugging. The current transformer 207 measures the electricity usage of the AC and control assembly 20 for electricity charge metering and energy consumption calculation.

In one embodiment of the present application, the side of the cabinet body 10 away from the first chamber 111 is provided with a cable hole (not shown in the drawings). One end of the cable group 406 passes through the cable hole and is connected to the battery cluster and/or the PCS. Wiring from the external battery system, fire protection system, temperature control system, lighting system, PCS, and control systems such as EMS are all introduced from the cable hole. This arrangement unifies the wiring, simplifying maintenance and repair. A mounting base is also arranged at the bottom of the cabinet body 10 away from the first chamber 111 to facilitate the installation of the cabinet body 10.

Wiring channels (not shown in the drawings) are arranged on opposite sides of the cabinet body 10. The wiring channels facilitate easy routing of the signal lines from the cable assembly 40 into the first chamber 111, as well as easy routing of other cables or signal lines connected to the AC and control assembly 20 into the first chamber 111. This setup enhances ease of maintenance and installation. A terminal block is also arranged inside the first chamber 111.

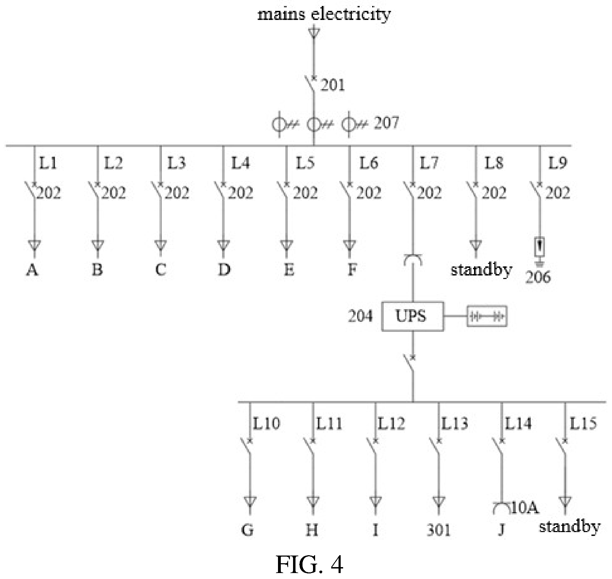

Referring to FIG. 4, the mains electricity is connected to the AC input circuit breaker 201 for power supply. The AC input circuit breaker 201 is connected to multiple branch circuit breakers 202 and controls the activation and deactivation of the branch circuit breakers 202. The number of branch circuit breakers 202 is nine, and the branch circuit breakers 202 are connected to multiple load devices to form nine branch lines. The load devices include a liquid cooling unit A, a dehumidifier B, a fire fighting fan C, a fire fighting host D, a lighting lamp E, and a maintenance socket F; the branch lines L1, L2, L3, L4, L5, and L6 are sequentially connected to the liquid cooling unit A, the dehumidifier B, the fire fighting fan C, the fire fighting host D, the lighting lamp E, and the maintenance socket F to supply power to the load devices. The branch line L7 is connected to the UPS 204, the branch line L8 is a standby line, and the branch line L9 is connected to the first surge protector 206 in the first chamber 111 to provide lightning protection.

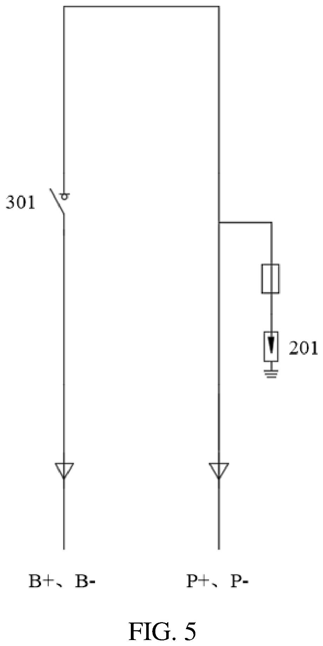

Referring to FIGs. 4 and 5, the UPS 204 is connected to multiple loads. The loads include a high-voltage box G, blinds H, a sensor I, and a debugging socket J. The UPS 204 includes six branch lines, namely, branch lines L10, L11, L12, L13, L14, and L15. The branch lines L10, L11, L12, and L14 are connected to the high-voltage box G, the blinds H, the sensor I, and the debugging socket J, respectively. The branch line L13 is connected to the second surge protector 401 located in the third chamber 113 to provide lightning protection. The branch line L15 is a standby line.

When the mains electricity is functionally normally, the mains electricity supplies power to the load devices through the AC input circuit breaker 201 and the branch circuit breakers 202. The UPS 204, connected to the branch line L7, stabilizes the voltage from the mains electricity and supplies power to the loads. However, when the mains power is disconnected, in order to maintain the stability of the system, the backup power supply 205 supplies power to the UPS 204 and then to the loads. The backup power supply 205 can supply power for 30 minutes in one embodiment, while ensuring that the DC isolation switch 301 has sufficient energy to be opened or closed, ensuring the safety of the energy storage integrated cabinet 200.

The DC isolation switch 301 is connected to the battery cluster, and the DC isolation switch 301 is configured to cut off or connect the connection to the battery cluster. A second surge protector 401 is arranged in the third chamber 113, and the second surge protector 401 is connected to the DC isolation switch 301 through the connecting busbar 403 for lightning protection. The DC isolation switch 301 is connected to the PCS through P+ and P- of the second sub-connecting busbar 405.

The positive busbar 403a of the first sub-connecting busbar 404 is the B+ connecting busbar of the battery cluster, and the negative busbar 403b of the first sub-connecting busbar 404 is the B- connecting busbar of the battery cluster. The positive busbar 403a of the second sub-connecting busbar 405 is the P+ connecting busbar of the PCS, and the negative busbar 403b of the second sub-connecting busbar 405 is the P- connecting busbar of the PCS.

The energy storage integration device 100 provided in this application includes at least the following working processes or principles: the energy storage integration device 100 includes an integrated cabin 10A and an energy storage integrated cabinet 200. The integrated cabin 10A includes an electrical compartment 1001. The energy storage integrated cabinet 200 is arranged in the electrical compartment 1001. The energy storage integrated cabinet 200 includes a cabinet body 10, and the cabinet body 10 includes a first chamber 111, a second chamber 112, and a third chamber 113 spaced apart along a first direction Z. The energy storage integrated cabinet 200 also includes an AC and control assembly 20, a DC distribution assembly 30, and a cable assembly 40. The AC and control assembly 20 is located in the first chamber 111. The DC distribution assembly 30 is located in the second chamber 112. The cable assembly 40 is located in the third chamber 113. The chamber housing the DC distribution assembly 30 and the chamber housing the cable assembly 40 are connected to each other, allowing the connecting busbar 403 or the signal line from the cable assembly 40 to connect to the DC isolation switch 301 of the DC distribution assembly 30. The AC and control assembly 20, the DC distribution assembly 30, and the cable assembly 40 are all integrated in the energy storage integrated cabinet 200, which improves the spatial utilization efficiency of the electrical compartment 1002. When any of the AC and control assembly 20, the DC distribution assembly 30, and the cable assembly 40 fails, it is merely necessary to open the energy storage integrated cabinet 200 to facilitate repairs. This integration simplifies maintenance and repair by maintenance personnel.

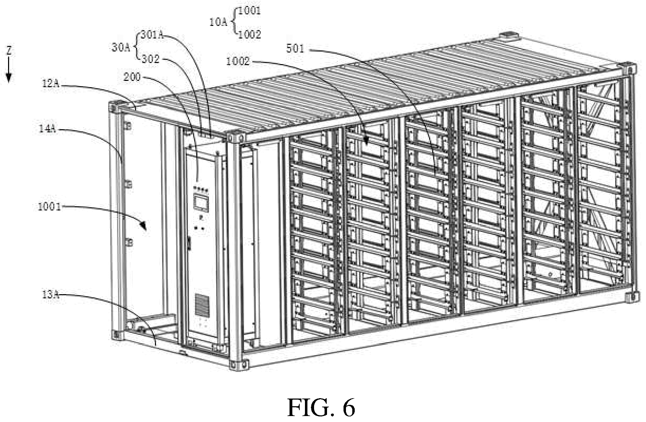

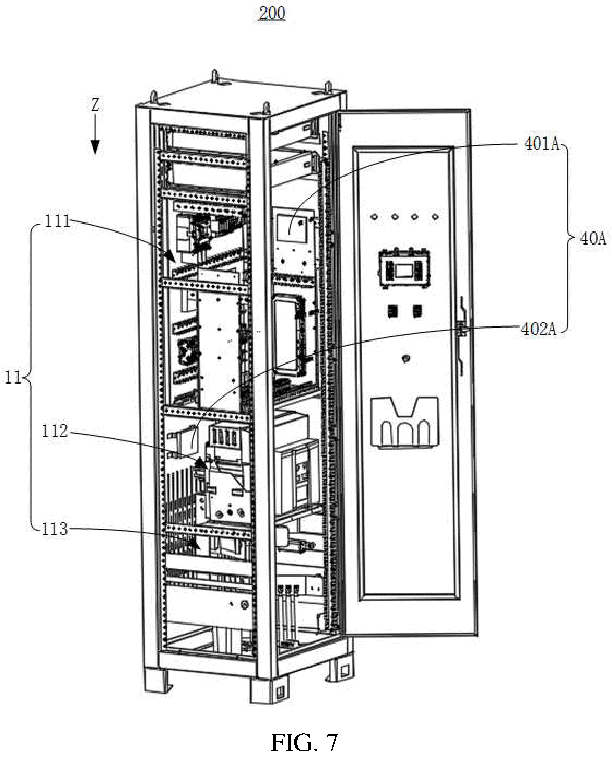

Referring to FIGs. 6 and 7, in some embodiments of this application, the energy storage integration device 100 includes an integrated cabin 10A, an energy storage integrated cabinet 200, a first fire protection component 30A, and a second fire protection component 40A. The integrated cabin 10A includes an electrical compartment 1001. The energy storage integrated cabinet 200 is installed in the electrical compartment 1001. The first fire protection component 30A is arranged in the electrical compartment 1001. The second fire protection component 40A is arranged in the energy storage integrated cabinet 200. The second fire protection component 40A includes fire protection equipment and a temperature sensing element (not shown in the drawings). The fire protection equipment is connected to the temperature sensing element and installed in the energy storage integrated cabinet 200. The temperature sensing element is configured to sense a second temperature information of the energy storage integrated cabinet 200.

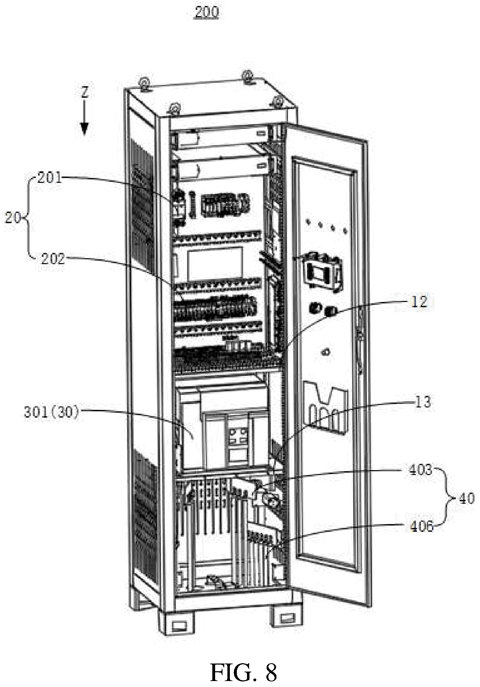

In order to simultaneously monitor the fire safety of the electrical compartment 1001 and the energy storage integrated cabinet 200, the first fire protection component 30A and the second fire protection component 40A are respectively arranged in the electrical compartment 1001 and the energy storage integrated cabinet 200. Referring to FIG. 8, the energy storage integrated cabinet 200 integrates the AC and control assembly 20, the DC distribution assembly 30, and the cable assembly 40 in one cabinet body, and the second fire protection component 40A can simultaneously monitor the fire safety of the AC and control assembly 20, the DC distribution assembly 30, and the cable assembly 40, and comprehensively cover the fire safety of the energy storage integration device 100 in all aspects. When a fire occurs, it can be timely discovered and warned, and the spread of the fire can be prevented, which greatly ensures the electrical safety of the energy storage integration device 100.

In one embodiment of this application, the first fire protection component 30A includes a smoke sensor 301A and a temperature sensor 302. The smoke sensor 301A and the temperature sensor 302 are installed in the electrical compartment 1001. The smoke sensor 301A is configured to sense a smoke concentration information of the electrical compartment 1001, and the temperature sensor 302 is configured to sense a first temperature information of the electrical compartment 1001.

The energy storage integration device 100 includes a first integrated plate 12A and a second integrated plate 13A. The first integrated plate 12A and the second integrated plate 13A are arranged opposite to each other, and a plurality of support beams 14A are arranged between the first integrated plate 12A and the second integrated plate 13A, thereby forming an accommodating space. The accommodating space is divided into an electrical compartment 1001 and a battery compartment 1002. The smoke sensor 301A and the temperature sensor 302 are located in the electrical compartment 1001. More specifically, the smoke sensor 301A and the temperature sensor 302 are arranged on the first integrated plate 12A in the electrical compartment 1001. The smoke sensor 301A and the temperature sensor 302 can be adjacently arranged on the first integrated plate 12A, and are configured to sense the smoke concentration information and the first temperature information, respectively.

The smoke sensor 301A is configured to detect the smoke concentration information in the air and determine whether the smoke concentration information meets a first alarm trigger condition. The first alarm trigger condition is: the smoke concentration value is greater than 0.15%. The temperature sensor 302 is configured to detect the first temperature information in the air and determine whether the first temperature information meets a second alarm trigger condition. The second alarm trigger condition is: the temperature value of the electrical compartment 1001 exceeds 70°C. When either the first alarm trigger condition or the second alarm trigger condition is triggered, the fire fighting host is triggered to issue an alarm signal and activate safety measures.

In one embodiment of the present application, the fire protection equipment is an aerosol fire extinguisher, and the temperature sensing element is a heat sensitive wire. The temperature sensing element (i.e., the heat sensitive wire) is configured to detect the second temperature information of the energy storage integrated cabinet 200. If the temperature value reaches 170°C-180°C, the fire protection equipment is triggered. The fire protection equipment is an aerosol fire extinguisher, which sprays fire extinguishing agent into the energy storage integrated cabinet 200 so that the fire extinguishing agent evenly permeates the entire energy storage integrated cabinet 200 to achieve the effects of cooling and fire extinguishing. If a third alarm trigger condition is triggered, the fire fighting host issues an alarm signal, and the battery management system activates corresponding safety measures and closes the DC isolation switch 301 and the AC input circuit breaker 201.

The second fire protection component 40A is configured to monitor and safeguard fire safety of the energy storage integrated cabinet 200, with the temperature sensing element connected to the battery management system (BMS). The temperature sensing element is configured to sense the second temperature information of the energy storage integrated cabinet 200 and determine whether the third alarm trigger condition is met. The third alarm trigger condition is: the second temperature value in the energy storage integrated cabinet 200 reaches 170°C-180°C and triggers the fire protection equipment. The battery management system receives the second temperature information of the temperature sensing element or the status information of the fire protection equipment (the status information of whether the fire protection equipment is opened or closed), and determines whether to keep the energy storage integrated cabinet 200 running or to shut it down according to the first temperature information or the status information of the fire protection equipment.

In one embodiment, an alarm controller can be arranged in the energy storage integrated cabinet 200, for example. The temperature sensing element is connected to the alarm controller, and the alarm controller is connected to the fire fighting host, thereby enabling the alarm function. However, this configuration is not exclusive and may vary based on actual application.

When any of the first alarm trigger condition, the second alarm trigger condition, and the third alarm trigger condition is triggered, the fire fighting host is triggered to issue an alarm signal and activate corresponding safety measures. The safety measures include turning off the DC isolation switch 301 and the AC input circuit breaker 201.

Referring to FIGs. 7 and 8, in one embodiment of this application, the energy storage integrated cabinet 200 includes a first chamber 111, a second chamber 112, and a third chamber 113 spaced apart along a first direction Z; the AC and control assembly 20 is located in the first chamber 111; the DC distribution assembly 30 is located in the second chamber 112; the cable assembly 40 is located in the third chamber 113.

The cable assembly 40 includes a plurality of connecting busbars 403, and the connecting busbars 403 are connected to the DC distribution assembly 30.

The energy storage integrated cabinet 200 includes a plurality of mutually spaced chambers 11 spaced apart along a first direction Z. The chambers 11 include a first chamber 111, a second chamber 112, and a third chamber 113, respectively. The AC and control assembly 20, the DC distribution assembly 30, and the cable assembly 40 are integrated in one cabinet body, which improves the space utilization efficiency of the electrical compartment 1001 and facilitates simultaneous fire monitoring of the AC and control assembly 20, the DC distribution assembly 30, and the cable assembly 40. The energy storage integrated cabinet 200 is provided with a cabinet door 14. The cabinet door 14 is configured to open or close the energy storage integrated cabinet 200, and also facilitates maintenance and repair by maintenance personnel.

A disconnect switch and a connect switch are arranged on the cabinet door 14. The disconnect switch and the connect switch are connected to the DC isolation switch 301 and the battery management system. The disconnect switch and the connect switch are configured to cooperatively control the deactivation and activation of the DC isolation switch 301 with the battery management system, thereby realizing disconnection from or connection to the battery cluster and/or the power conversion system (PCS), which can reduce the risk of thermal runaway, isolate faults, and prevent the spread of fire.

Surge protectors are arranged in both the first chamber 111 and the third chamber 113. The surge protectors are connected to the main control board to provide lightning and surge protection for the energy storage integrated cabinet 200.

The bottom of the energy storage integrated cabinet 200 away from the first chamber 111 is provided with cable holes (not shown in the drawings). The cable assembly 40 also includes a plurality of cable groups 406. One end of each cable group 406 extends out of the energy storage integrated cabinet 200 from one end of the cable hole and is connected to the battery cluster and/or the PCS. Wiring channels (not shown in the figure) are also arranged in the energy storage integrated cabinet 200. The cable assembly 40 also includes signal lines. The signal lines are connected to both the surge protectors and the main control board. The wiring channels (not shown in the drawings) are configured to accommodate the routing of the signal lines or cables. The surge protector located in the third chamber 113 is connected to the main control board. The signal line of the surge protector may be routed through the wiring channel to the main control board, offering lightning and surge protection.

The AC and control assembly 20 includes an AC input circuit breaker 201 and a plurality of branch circuit breakers 202. The AC input circuit breaker 201 is connected to the branch circuit breakers 202. The branch circuit breakers 202 are respectively connected to different load devices. The AC input circuit breaker 201 is connected to AC current (for example, mains electricity) and supplies power to different load devices through the branch circuit breakers 202.

The load devices can include, for example, a liquid cooling unit, a dehumidifier, a fire fighting fan, a fire fighting host, or a lighting lamp, etc. The load devices can be located in the integrated cabin 10A, for example. The AC and control assembly 20 provides auxiliary power to supply power to the load devices. When the second fire protection component 40A provides the second temperature information or status information to the battery management system, the battery management system can control the deactivation of the AC input circuit breaker 201, that is, cut off the AC current (for example, mains electricity), and the load devices stop operating to avoid fire or other electrical safety hazards, and prevent the risk of electric shock during fire extinguishing, thus ensuring personnel safety.

The DC distribution assembly 30 includes a DC isolation switch 301. The cable assembly 40 includes connecting busbars 403 and multiple cable groups 406. One end of each of the connecting busbars 403 is connected to the DC isolation switch 301, and the other end is connected to the battery cluster and/or the PCS through the cable group 406.

The connecting busbar 403 includes a first sub-connecting busbar 404 and a second sub-connecting busbar 405. The first sub-connecting busbar 404 is connected to the battery cluster through the cable group 406, and the second sub-connecting busbar 405 is connected to the PCS through the cable group 406. Both the first sub-connecting busbar 404 and the second sub-connecting busbar 405 include a positive busbar 403a and a negative busbar 403b. The positive busbar 403a and the negative busbar 403b are located on opposite sides of the third chamber 113. An isolation plate 408 is also arranged between the positive busbar 403a and the negative busbar 403b to avoid a short circuit between the positive busbar 403a and the negative busbar 403b. The positive busbar 403a and the negative busbar 403b are connected to the DC isolation switch 301 and the cable groups 406. The cable assembly 40 also includes insulating columns 409. The insulating columns 409 are located on the side of the positive busbar 403a and the negative busbar 403b away from the cabinet door 14. The insulating columns 409 are configured to connect the positive busbar 403a and the negative busbar 403b to the third chamber 113 and provide an insulating effect.

The DC isolation switch 301 is connected to the battery management system. When the first fire protection component 30A or the second fire protection component 40A provides the second temperature information or status information to the battery management system, the battery management system can control the deactivation of the DC isolation switch 301, cutting off the connection of the battery cluster and/or the PCS to avoid fire or other electrical safety hazards.

In one embodiment of this application, the energy storage integrated cabinet 200 includes a first partition 12 and a second partition 13 spaced apart along a first direction Z. The first partition 12 and the second partition 13 divide the energy storage integrated cabinet 200 into a first chamber 111, a second chamber 112, and a third chamber 113, wherein the second partition 13 is provided with a connecting groove in the first direction, and the connecting groove connects the second chamber 112 and the third chamber 113.

The first partition 12 and the second partition 13 are, for example, parallel or inclined to each other. In some embodiments of this application, the first partition 12 and the second partition 13 are, for example, parallel to the upper surface of the energy storage integrated cabinet 200 and perpendicular to the sidewall of the energy storage integrated cabinet 200. The first partition 12 and the second partition 13 divide the energy storage integrated cabinet 200 into a first chamber 111, a second chamber 112, and a third chamber 113, so that the AC and control assembly 20, the DC distribution assembly 30, and the cable assembly 40 can be sequentially arranged in the first chamber 111, the second chamber 112, and the third chamber 113.

The second partition 13 is provided with a connecting groove in the first direction Z, for example. The connecting groove is configured for wiring the connecting busbar 403 or the signal line. The connecting groove allows the second chamber 112 and the third chamber 113 to be connected, unifying the wiring path and facilitating the monitoring and arrangement of the wiring. For example, one end of each of the connecting busbars 403 can be electrically connected to the DC distribution assembly 30 through the connecting groove.

In one embodiment of this application, the second fire protection component 40A includes a first sub-fire protection component 401A and a second sub-fire protection component 402A. The first sub-fire protection component 401A is installed in the first chamber 111, and the second sub-fire protection component 402A is installed in the second chamber 112 and/or the third chamber 113.

The energy storage integrated cabinet 200 has two fire protection facilities, namely, the first sub-fire protection component 401A and the second sub-fire protection component 402A. The first sub-fire protection component 401A is installed in the first chamber 111 and is configured to monitor and protect the fire safety of the AC and control assembly 20. The second sub-fire protection component 402A is arranged in the second chamber 112 or the third chamber 113. Since the second partition 13 is provided with a connecting groove, the second chamber 112 and the third chamber 113 are connected to each other, and the second chamber 112 and the third chamber 113 can share one fire protection facility, that is, share the second sub-fire protection component 402A. However, the number of fire protection facilities of the energy storage integrated cabinet 200 is not limited to two, and the fire protection facilities can be arranged in the first chamber 111, the second chamber 112, and the third chamber 113, subject to the actual application.

The second fire protection component 40A includes a first sub-fire protection component 401A and a second sub-fire protection component 402A. The second temperature message of the second fire protection component 40A can include a first sub-temperature information and a second sub-temperature information. Either the first sub-temperature information or the second sub-temperature information can trigger the third alarm trigger condition, so that the battery management system can control the deactivation of the DC isolation switch 301 and the AC input circuit breaker 201.

In one embodiment of this application, both the first sub-fire protection component 401A and the second sub-fire protection component 402A include fire protection equipment and a temperature sensing element.

In one embodiment of this application, the energy storage integration device 100 also includes a battery management system. The battery management system includes a battery management system main control board 203 and a battery management system slave control board connected to each other. The battery management system main control board is arranged in the energy storage integrated cabinet 200, and the battery management system slave control board is arranged in the electrical compartment 1001 and connected to the fire fighting host. The battery management system slave control board is configured to collect temperature information or status information of the fire fighting host.

The battery management system main control board 203 is configured to collect signals from the battery management system slave control board and provide signal acquisition control. The signal acquisition control includes, for example, collecting information such as current, voltage, and temperature of the battery (battery cluster) and the load equipment, monitoring the operating status of equipment such as the load devices or the battery, and issuing protection actions in response to abnormalities or faults.

The AC input circuit breaker 201 and the DC isolation switch 301 are connected to the battery management system. The safety measures are, for example: when any of the first alarm trigger condition, the second alarm trigger condition, and the third alarm trigger condition is triggered, the fire fighting host issues an alarm and transmits it to the battery management system, and the battery management system issues a signal to control the deactivation of the AC input circuit breaker 201 and the DC isolation switch 301, and the energy storage integrated cabinet 200 shuts down.

In one embodiment of this application, the integrated cabin 10A also includes a battery compartment 1002, in which a plurality of battery racks 501 are arranged in an array. The battery clusters are installed on the battery racks 501, and the battery clusters are connected to the energy storage integrated cabinet 200.

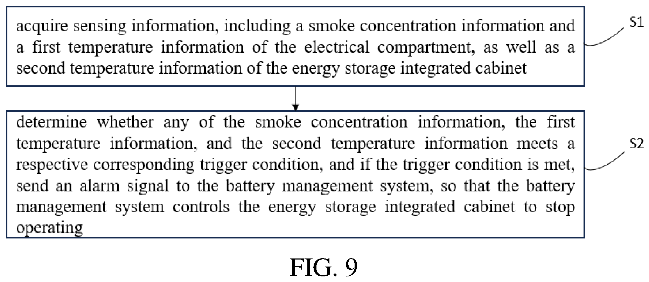

Referring to FIG. 9, in a second aspect, this application provides a safety system for the energy storage integration device 100, which includes the energy storage integration device 100 and a processor. The processor executes the following steps:
Step S1: acquire sensing information, including a smoke concentration information and a first temperature information of the electrical compartment 1001, as well as a second temperature information of the energy storage integrated cabinet 200.
Step S2: determine whether any of the smoke concentration information, the first temperature information, and the second temperature information meets a respective corresponding trigger condition. If the trigger condition is met, an alarm signal is sent to the battery management system, so that the battery management system controls the energy storage integrated cabinet 200 to stop operating.

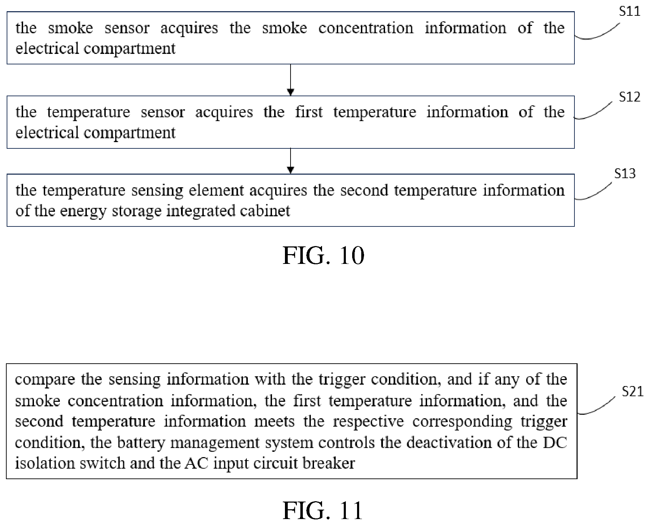

Referring to FIG. 10, step S1 also includes steps S11 to S13:
In step S11, the smoke sensor 301A acquires the smoke concentration information of the electrical compartment 1001.
In step S12, the temperature sensor 302 acquires the first temperature information of the electrical compartment 1001.
In step S13, the temperature sensing element acquires the second temperature information of the energy storage integrated cabinet 200.

In step S2, the trigger conditions include a first alarm trigger condition, a second alarm trigger condition, and a third alarm trigger condition, wherein the first alarm trigger condition is: the smoke concentration value is greater than 0.15%; the second alarm trigger condition is: the temperature value of the electrical compartment 1001 exceeds 70°C; the third alarm trigger condition is: the temperature value in the energy storage integrated cabinet 200 reaches 170°C-180°C and triggers the fire protection equipment.

The second temperature information includes the first sub-temperature information and the second sub-temperature information. Either the first sub-temperature information or the second sub-temperature information can trigger the third alarm trigger condition.

Referring to FIG. 11, step S2 also includes step S21:
Step S21, compare the sensing information with the trigger condition. If any of the smoke concentration information, the first temperature information, and the second temperature information meets the respective corresponding trigger condition, the battery management system controls the deactivation of the DC isolation switch 301 and the AC input circuit breaker 201.

It can be understood that the first fire protection component 30A or the second fire protection component 40A can determine the shutdown of the energy storage integration device 100. The first fire protection component 30A and the second fire protection component 40A can determine the shutdown of the energy storage integration device 100. Both the first sub-fire protection component 401A and the second sub-fire protection component 402A can determine the shutdown of the energy storage integration device 100.

The energy storage integration device 100 provided in this application includes at least the following working processes or principles: the energy storage integration device 100 includes an integrated cabin 10A, an energy storage integrated cabinet 200, a first fire protection component 30A, and a second fire protection component 40A. The integrated cabin 10A includes an electrical compartment 1001; the energy storage integrated cabinet 200 is installed in the electrical compartment 1001; the first fire protection component 30A is arranged in the electrical compartment 1001; the second fire protection component 40A is arranged in the energy storage integrated cabinet 200. The first fire protection component 30A and the second fire protection component 40A perform fire monitoring on the electrical compartment 1001 and the energy storage integrated cabinet 200, respectively. When the predetermined conditions are met, the battery management system controls the shutdown of the AC input circuit breaker 201 and the DC isolation switch 301, thereby disconnecting the AC input circuit breaker 201 and the DC isolation switch 301 from the load devices or from the battery clusters and the PCS. This arrangement ensures comprehensive fire protection across the energy storage integration device 100, protecting the electrical system of the entire energy storage integration device 100, and preventing the spread of fire. At the same time, the AC and control assembly 20, the DC distribution assembly 30, and the cable assembly 40 are integrated in one cabinet body, which greatly enhances the space utilization in the battery compartment 1002. In addition, the second fire protection component 40A performs fire monitoring on the AC and control assembly 20, the DC distribution assembly 30, and the cable assembly 40, which improves maintenance efficiency while providing comprehensive fire protection coverage in all aspects, and reduces construction costs and maintenance costs.

## Claims

1. An energy storage integration device, comprising:
an integrated cabin (10A) comprising an electrical compartment (1001); and
an energy storage integrated cabinet (200) located in the electrical compartment (1001), wherein the energy storage integrated cabinet (200) comprises a cabinet body (10), the cabinet body (10) includes a first chamber (111), a second chamber (112), and a third chamber (113) spaced apart along a first direction;
wherein the energy storage integrated cabinet (200) further comprises an AC and control assembly (20), a DC distribution assembly (30), and a cable assembly (40); the AC and control assembly (20) is disposed in the first chamber (111); the DC distribution assembly (30) is disposed in the second chamber (112); the cable assembly (40) is disposed in the third chamber (113).

2. The energy storage integration device according to claim 1, wherein the cabinet body (10) includes a first partition (12) and a second partition (13) spaced apart in the first direction; the first partition (12) and the second partition (13) divide the cabinet body (10) into a first chamber (111), a second chamber (112), and a third chamber (113).

3. The energy storage integration device according to claim 2, wherein the second partition (13) is provided with a connecting groove in the first direction, and the connecting groove connects the second chamber (112) and the third chamber (113).

4. The energy storage integration device according to claim 3, wherein the cable assembly (40) comprises a plurality of connecting busbars (403); the DC distribution assembly (30) includes a DC isolation switch (301), and each of the connecting busbars (403) is connected to the DC isolation switch (301).

5. The energy storage integration device according to claim 4, wherein the cable assembly (40) comprises a plurality of cable groups (406); one end of each of the cable groups (406) is connected to one of the connecting busbars (403), and another end of each of the cable groups (406) is connected to a battery cluster and/or a power conversion system (PCS).

6. The energy storage integration device according to claim 4, wherein the connecting busbar (403) includes a positive busbar (403a) and a negative busbar (403b); the positive busbar (403a) and the negative busbar (403b) are located on opposite sides of the third chamber (113); an isolation plate (408) is installed in the third chamber (113) and disposed between the positive busbar (403a) and the negative busbar (403b).

7. The energy storage integration device according to claim 4, wherein the AC and control assembly (20) comprises an AC input circuit breaker (201) and a plurality of branch circuit breakers (202); the AC input circuit breaker (201) is connected to each of the branch circuit breakers (202).

8. The energy storage integration device according to claim 7, wherein the AC and control assembly (20) includes a battery management system main control board (203); the battery management system main control board (203) is connected to the AC input circuit breaker (201) and each of the branch circuit breakers (202).

9. The energy storage integration device according to claim 8, wherein the AC and control assembly (20) further comprises an uninterruptible power supply (204) and a backup power supply (205) connected to the uninterruptible power supply (204); the uninterruptible power supply (204) is connected to each of the branch circuit breakers (202) and the DC isolation switch (301).

10. The energy storage integration device according to claim 4, wherein the cabinet body (10) is provided with a cable hole on a side away from the first chamber (111); one end of the cable group (406) passes through the cable hole and is connected to a battery cluster and/or a power conversion system (PCS).

11. The energy storage integration device according to any one of claims 1 to 10, further comprising:
a first fire protection component (30A) disposed in the electrical compartment (1001); and
a second fire protection component (40A) disposed in the energy storage integrated cabinet (200), wherein the second fire protection component (40A) comprises fire protection equipment and a temperature sensing element; the fire protection equipment is connected to the temperature sensing element and installed in the energy storage integrated cabinet (200), and the temperature sensing element is configured to sense a second temperature information of the energy storage integrated cabinet (200).

12. The energy storage integration device according to claim 11, wherein the first fire protection component (30A) includes a smoke sensor (301A) and a temperature sensor (302), both the smoke sensor (301A) and the temperature sensor (302) are installed in the electrical compartment (1001); the smoke sensor (301A) is configured to sense a smoke concentration information of the electrical compartment (1001), and the temperature sensor (302) is configured to sense a first temperature information of the electrical compartment (1001).

13. The energy storage integration device according to claim 12, wherein the first fire protection component (30A) further comprises a fire fighting host, and the fire fighting host is installed in the electrical compartment (1001) and is connected to the smoke sensor (301A) and the temperature sensor (302).

14. The energy storage integration device according to claim 11, wherein the fire protection equipment comprises an aerosol fire extinguisher, and the temperature sensing element is a heat sensitive wire.

15. The energy storage integration device according to claim 11, wherein the energy storage integrated cabinet (200) comprises a first chamber (111), a second chamber (112), and a third chamber (113) spaced apart along a first direction;
an AC and control assembly (20) disposed in the first chamber (111);
a DC distribution assembly (30) disposed in the second chamber (112); and
a cable assembly (40) disposed in the third chamber (113);
wherein the cable assembly (40) comprises a plurality of connecting busbars (403), and each of the connecting busbars (403) is connected to the DC distribution assembly (30).

16. The energy storage integration device according to claim 15, wherein the energy storage integrated cabinet (200) comprises a first partition (12) and a second partition (13) spaced apart in the first direction; the first partition (12) and the second partition (13) divide the energy storage integrated cabinet (200) into a first chamber (111), a second chamber (112), and a third chamber (113), wherein the second partition (13) is provided with a connecting groove in the first direction, and the connecting groove connects the second chamber (112) and the third chamber (113).

17. The energy storage integration device according to claim 16, wherein the second fire protection component (40A) comprises a first sub-fire protection component (401A) and a second sub-fire protection component (402A), the first sub-fire protection component (401A) is installed in the first chamber (111), and the second sub-fire protection component (402A) is installed in the second chamber (112) and/or the third chamber (113).

18. The energy storage integration device according to claim 17, wherein both the first sub-fire protection component (401A) and the second sub-fire protection component (402A) include fire protection equipment and a temperature sensing element.

19. The energy storage integration device according to claim 13, further comprising:
a battery management system comprising a battery management system main control board (203) and a battery management system slave control board, wherein the battery management system main control board (203) is disposed in the energy storage integrated cabinet (200), and the battery management system slave control board is arranged in the electrical compartment (1001) and connected to the fire fighting host.

20. The energy storage integration device according to claim 11, wherein the integrated cabin (10A) also includes a battery compartment (1002), a plurality of battery racks (501) are arranged in an array in the battery compartment (1002), and a plurality of battery clusters are installed on the battery racks (501), and the battery clusters are connected to the energy storage integrated cabinet (200).
